# EUROPEAN PATENT APPLICATION

(11) **EP 4 383 795 A1**
(43) Date of publication of application: **12.06.2024**
(21) Application number: 22862988.7
(22) Date of filing: 01.08.2022
(51) Int. Cl.: H04W 24/04

(54) **COMMUNICATION METHOD AND APPARATUS**

(30) Priority: 30.08.2021 CN 202111001642
(71) Applicant: Huawei Technologies Co., Ltd., Shenzhen, Guangdong 518129 (CN)
(72) Inventor: XU, Bin, Shenzhen, Guangdong 518129 (CN); CHEN, Lei, Shenzhen, Guangdong 518129 (CN); LI, Chenwan, Shenzhen, Guangdong 518129 (CN)
(74) Representative: MERH-IP Matias Erny Reichl Hoffmann Patentanwälte PartG mbB
(86) International application number: PCT/CN2022/109340
(87) International publication number: WO 2023/029847

(57) **Abstract**

This application provides a communication method and apparatus. The communication method includes: A network device sends a first message to a first terminal device UE, where the first message includes information about a first resource, and the first resource is to be used to transmit a second message; and when the network device receives the second message from the first UE by using the first resource, the network device determines that the first UE is not faulty, where the second message indicates that the first UE is not faulty. Therefore, the network device may determine, based on the second message sent by the first UE, that the first UE is not faulty. This ensures that service reliability is not affected by a fault of a terminal device, avoids forced termination of service transmission, and ensures transmission reliability.

## Description

This application claims priority to Chinese Patent Application No. 202111001642.X, filed with the China National Intellectual Property Administration on August 30, 2021 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

Currently, in many scenarios, such as an industrial scenario, a requirement for service reliability is increasingly high. Usually, higher service reliability can be achieved by sacrificing partial resource utilization.

However, due to impact of factors such as costs, hardware, and software of terminal devices, there is a problem that a service reliability requirement cannot be met. In addition, sacrificing resource utilization causes a problem of low resource utilization. Therefore, how to efficiently ensure that a terminal device can meet a service reliability requirement is a problem to be resolved currently.

### SUMMARY

This application provides a communication method and apparatus, so that a network device can detect, in a timely manner, whether a first terminal device (user equipment, UE) is faulty, to ensure that service reliability is not affected by a fault of the terminal device, and avoid a loss caused by forced termination of service transmission.

According to a first aspect, a communication method is provided, including: A network device sends a first message to a first terminal device UE, where the first message includes information about a first resource, and the first resource is to be used to transmit a second message; and when the network device receives the second message from the first UE by using the first resource, the network device determines that the first UE is not faulty, where the second message indicates that the first UE is not faulty.

Based on the foregoing solution, the network device may determine, based on the second message sent by the first UE, that the first UE is not faulty. This ensures that service reliability is not affected by a fault of a terminal device, avoids forced termination of service transmission, and ensures transmission reliability.

With reference to the first aspect, in some implementations of the first aspect, the first resource includes at least one of a time domain resource or a frequency domain resource.

With reference to the first aspect, in some implementations of the first aspect, the network device configures the first resource based on at least one of survival time information, packet delay budget information, takeover delay information, or time division duplex information.

With reference to the first aspect, in some implementations of the first aspect, the network device sends a third message to the first UE, where the third message is used to activate or deactivate a mechanism in which the first UE sends the second message to the network device by using the first resource.

Based on the foregoing solution, when service interaction is frequent, a resource is insufficient, or cell load is relatively heavy (there are a relatively large quantity of accessed UEs), or when the network device determines that a fault probability of the first UE is relatively low, the network device may send, to the first UE, the third message used to deactivate the mechanism in which the first UE sends the second message to the network device by using the first resource. In this way, load can be relieved. After the load is relieved, the network device may send, to the first UE, the third message used to activate the mechanism in which the first UE sends the second message to the network device by using the first resource, to resume sending of the second message by the first UE, so as to ensure reliability of the first UE.

With reference to the first aspect, in some implementations of the first aspect, when the first resource overlaps a second resource, the network device sends a fourth message to the first UE, where the fourth message indicates the first UE to cancel sending the second message to the network device by using the first resource, and the second resource is used by the first UE to transmit data.

Based on the foregoing solution, when the first resource overlaps the second resource, the first UE cancels sending the second message to the network device by using the first resource, so that resource utilization can be improved.

With reference to the first aspect, in some implementations of the first aspect, when the network device does not receive the second message and/or data from the first UE by using the first resource, the network device determines that the first UE is faulty.

With reference to the first aspect, in some implementations of the first aspect, the network device sends a fifth message to second UE, where the fifth message indicates the second UE to start data transmission with the network device; and the network device performs data transmission with the second UE.

Based on the foregoing solution, when the network device does not receive the second message and/or the data from the first UE by using the first resource, the network device may determine that the first UE is faulty, and send, to the second UE, the fifth message that indicates the second UE to start data transmission with the network device. This can ensure that service transmission is not affected by a fault of the first UE, and improve service transmission reliability.

With reference to the first aspect, in some implementations of the first aspect, the fifth message further indicates information about a start data packet of the data transmission.

With reference to the first aspect, in some implementations of the first aspect, the information about the start data packet of the data transmission includes at least one of a data radio bearer identifier, a logical channel identifier, or a sequence number.

Based on the foregoing solution, according to the information about the start data packet carried in the fifth message, a data packet transmitted between the second UE and the network device can be spliced with a data packet transmitted before the first UE is faulty. This ensures service transmission continuity, improves service transmission reliability, and improves user experience.

According to a second aspect, a communication method is provided, including: First UE receives a first message from a network device, where the first message includes information about a first resource, and the first resource is to be used to transmit a second message; and the first UE sends the second message to the network device by using the first resource, where the second message indicates that the first UE is not faulty.

Based on the foregoing solution, for beneficial effects, refer to related descriptions in the first aspect. For brevity, details are not described again in this application.

With reference to the second aspect, in some implementations of the second aspect, the first resource includes at least one of a time domain resource or a frequency domain resource.

With reference to the second aspect, in some implementations of the second aspect, the first UE receives a third message from the network device, where the third message is used to activate or deactivate a mechanism in which the first UE sends the second message to the network device by using the first resource.

With reference to the second aspect, in some implementations of the second aspect, when the first resource overlaps a second resource, the first UE cancels sending the second message to the network device by using the first resource, where the second resource is used by the first UE to transmit data.

With reference to the second aspect, in some implementations of the second aspect, the first UE receives a fourth message from the network device, where the fourth message indicates the first UE to cancel sending the second message.

According to a third aspect, a communication method is provided, including: Second UE receives a fifth message from a network device, where the fifth message indicates the second UE to start data transmission with the network device, the second UE is in a waiting state, and in the waiting state, the second UE does not perform data transmission with the network device; and the second UE performs data transmission with the network device.

Based on the foregoing solution, for beneficial effects, refer to related descriptions in the first aspect. For brevity, details are not described again in this application.

With reference to the third aspect, in some implementations of the third aspect, the fifth message further indicates information about a start data packet of the data transmission.

With reference to the third aspect, in some implementations of the third aspect, the information about the start data packet of the data transmission includes at least one of a data radio bearer identifier, a logical channel identifier, or a sequence number.

According to a fourth aspect, a communication apparatus is provided, including: a transceiver module, configured to send a first message to a first terminal device UE, where the first message includes information about a first resource, and the first resource is to be used to transmit a second message; and a processing module, configured to: when a network device receives the second message from the first UE by using the first resource, determine, by the network device, that the first UE is not faulty, where the second message indicates that the first UE is not faulty.

Based on the foregoing solution, for beneficial effects, refer to related descriptions in the first aspect. For brevity, details are not described again in this application.

With reference to the fourth aspect, in some implementations of the fourth aspect, the first resource includes at least one of a time domain resource or a frequency domain resource.

With reference to the fourth aspect, in some implementations of the fourth aspect, the processing module is further configured to configure the first resource based on at least one of survival time information, packet delay budget information, takeover delay information, or time division duplex information.

With reference to the fourth aspect, in some implementations of the fourth aspect, the transceiver module is further configured to send a third message to the first UE, where the third message is used to activate or deactivate a mechanism in which the first UE sends the second message to the network device by using the first resource.

With reference to the fourth aspect, in some implementations of the fourth aspect, when the first resource overlaps a second resource, the transceiver module is further configured to send a fourth message to the first UE, where the fourth message indicates the first UE to cancel sending the second message to the network device by using the first resource, and the second resource is used by the first UE to transmit data.

With reference to the fourth aspect, in some implementations of the fourth aspect, the processing module is further configured to: when the second message and/or data are/is not received from the first UE by using the first resource, determine that the first UE is faulty.

With reference to the fourth aspect, in some implementations of the fourth aspect, the transceiver module is further configured to send a fifth message to second UE, where the fifth message indicates the second UE to start data transmission with the network device; and the network device performs data transmission with the second UE.

With reference to the fourth aspect, in some implementations of the fourth aspect, the fifth message further indicates information about a start data packet of the data transmission.

With reference to the fourth aspect, in some implementations of the fourth aspect, the information about the start data packet of the data transmission includes at least one of a data radio bearer identifier, a logical channel identifier, or a sequence number.

According to a fifth aspect, a communication apparatus is provided, including: a transceiver module, configured to receive a first message from a network device, where the first message includes information about a first resource, and the first resource is to be used to transmit a second message; and a processing module, configured to determine the first resource based on the first message. The transceiver module is configured to send the second message to the network device by using the first resource, where the second message indicates that the first UE is not faulty.

Based on the foregoing solution, for beneficial effects, refer to related descriptions in the first aspect. For brevity, details are not described again in this application.

With reference to the fifth aspect, in some implementations of the fifth aspect, the first resource includes at least one of a time domain resource or a frequency domain resource.

With reference to the fifth aspect, in some implementations of the fifth aspect, the transceiver module is further configured to receive a third message from the network device, where the third message is used to activate or deactivate a mechanism in which the first UE sends the second message to the network device by using the first resource.

With reference to the fifth aspect, in some implementations of the fifth aspect, when the first resource overlaps a second resource, the processing module is further configured to cancel sending the second message to the network device by using the first resource, where the second resource is used by the first UE to transmit data.

With reference to the fifth aspect, in some implementations of the fifth aspect, the transceiver module is further configured to receive a fourth message from the network device, where the fourth message indicates the first UE to cancel sending the second message.

According to a sixth aspect, a communication apparatus is provided, including: a transceiver module, configured to receive a fifth message from a network device, where the fifth message indicates second UE to start data transmission with the network device, the second UE is in a waiting state, and in the waiting state, the second UE does not perform data transmission with the network device; and a processing module, configured to determine, based on the fifth message, to start data transmission with the network device. The transceiver module is further configured to perform data transmission with the network device.

Based on the foregoing solution, for beneficial effects, refer to related descriptions in the first aspect. For brevity, details are not described again in this application.

With reference to the sixth aspect, in some implementations of the sixth aspect, the fifth message further indicates information about a start data packet of the data transmission.

With reference to the sixth aspect, in some implementations of the sixth aspect, the information about the start data packet of the data transmission includes at least one of a data radio bearer identifier, a logical channel identifier, or a sequence number.

According to a seventh aspect, a communication apparatus is provided. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any possible implementation of any one of the first aspect to the third aspect by using a logic circuit or by executing code instructions.

According to an eighth aspect, a computer-readable storage medium is provided. The computer-readable storage medium stores a computer program or instructions. When the computer program or the instructions are executed, the method according to any possible implementation of any one of the first aspect to the third aspect is implemented.

According to a ninth aspect, a computer program product including instructions is provided. When the instructions are run, the method according to any possible implementation of any one of the first aspect to the third aspect is implemented.

According to a tenth aspect, a computer program is provided. The computer program includes code or instructions, and when the code or the instructions are run, the method according to any possible implementation of any one of the first aspect to the third aspect is implemented.

According to an eleventh aspect, a chip system is provided. The chip system includes a processor, and may further include a memory, configured to implement the method according to any possible implementation of any one of the first aspect to the third aspect. The chip system may include a chip, or may include a chip and another discrete component.

According to a twelfth aspect, a communication system is provided. The communication system includes the apparatuses in the fourth aspect to the sixth aspect.

### BRIEF DESCRIPTION OF DRAWINGS

FIG. 1 is a schematic diagram of a wireless communication system 100;
FIG. 2 is a diagram of an architecture of a cellular network protocol;
FIG. 3 is a diagram of an architecture of data transmission;
FIG. 4 is a diagram of an architecture of data transmission applicable to an embodiment of this application;
FIG. 5 is a schematic diagram of a communication method 500 according to an embodiment of this application;
FIG. 6 is a schematic diagram of a MAC CE header according to an embodiment of this application;
FIG. 7 is a schematic diagram of a PDCP control PDU header according to an embodiment of this application;
FIG. 8 is a schematic diagram of an RLC control PDU header according to an embodiment of this application;
FIG. 9 is a schematic block diagram of a communication apparatus 900 according to an embodiment of this application;
FIG. 10 is a schematic block diagram of a communication apparatus 1000 according to an embodiment of this application;
FIG. 11 is a simplified schematic diagram of a structure of a terminal device 1100 according to an embodiment of this application; and
FIG. 12 is a simplified schematic diagram of a structure of a network device 1200 according to an embodiment of this application.

### DESCRIPTION OF EMBODIMENTS

The following describes technical solutions of this application with reference to accompanying drawings.

The technical solutions in embodiments of this application may be applied to various communication systems, for example, a 5th generation (5th generation, 5G) system, an NR (New Radio) system, a long term evolution (long term evolution, LTE) system, and a universal mobile telecommunications system (universal mobile telecommunications system, UMTS).

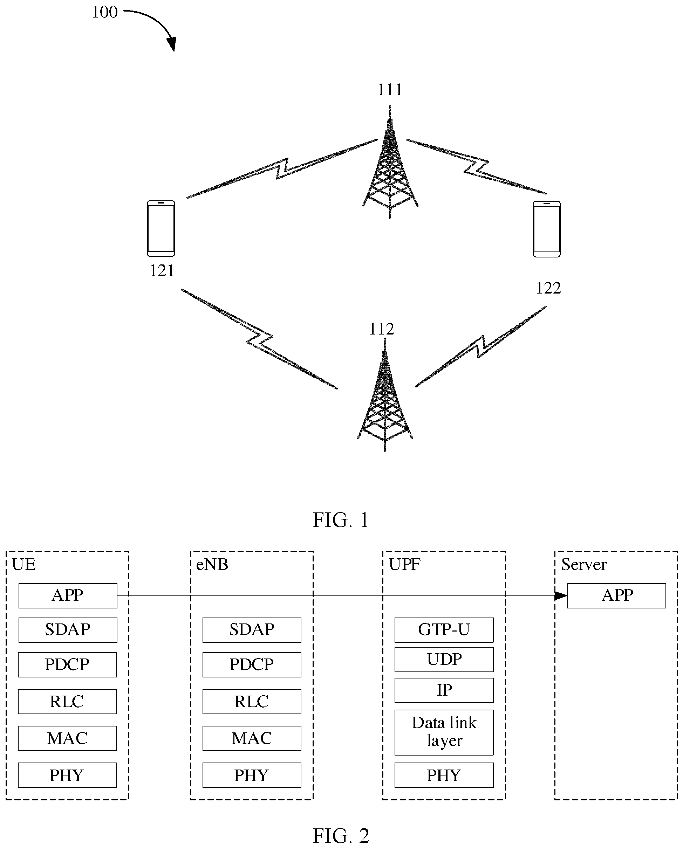

FIG. 1 is a schematic diagram of a wireless communication system 100. As shown in FIG. 1, the wireless communication system 100 may include at least one terminal device, for example, terminal devices 121 and 122 in FIG. 1. The wireless communication system 100 may further include at least one network device, for example, a network device 111 and a network device 112 in FIG. 1. The terminal device 121 in FIG. 1 may communicate with both the network device 111 and the network device 112, the terminal device 122 may communicate with both the network device 111 and the network device 112, the network device 111 may communicate with both the terminal device 121 and the terminal device 122, and the network device 112 may communicate with both the terminal device 121 and the terminal device 122. A plurality of antennas may be configured for both the network device and the terminal device, and the network device and the terminal device may communicate with each other by using a multi-antenna technology.

It should be understood that FIG. 1 is merely an example for description, and this application is not limited thereto.

It should be understood that the network device in the wireless communication system may be any device with wireless sending and receiving functions. The device includes but is not limited to: an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a home evolved NodeB, or a home NodeB, HNB), a baseband unit (Base Band Unit, BBU), or an access point (Access Point, AP), a wireless relay node, a wireless backhaul node, a transmission point (transmission point, TP), a transmission and reception point (transmission and reception point, TRP), or the like in a wireless fidelity (Wireless Fidelity, Wi-Fi) system, or may be a gNB or a transmission point (TRP or TP) in a 5G system such as an NR system, or one antenna panel or a group of antenna panels (including a plurality of antenna panels) of a base station in a 5G system, or may be a network node that forms a gNB or a transmission point, for example, a baseband unit (BBU) or a distributed unit (distributed unit, DU).

In some deployments, the gNB may include a central unit (centralized unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be further understood that the terminal device in the wireless communication system may include various handheld devices with a wireless communication function, a vehicle-mounted device, a wearable device, a computing device or another processing device connected to a wireless modem, and various forms of terminals, mobile stations (mobile station, MS), terminals (terminal), or soft terminals, for example, a water meter, an electric meter, and a sensor.

For example, user equipment in embodiments of this application may be an access terminal, a subscriber unit, a subscriber station, a mobile station, a mobile console, a relay station, a remote station, a remote terminal, a mobile device, a user terminal (user terminal), terminal equipment (terminal equipment), a wireless communication device, a user agent, or a user apparatus. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, user equipment in a 5G network, user equipment in a future evolved public land mobile network (public land mobile network, PLMN), user equipment in the future internet of vehicles, or the like. This is not limited in embodiments of this application.

By way of example and not limitation, in embodiments of this application, the wearable device may also be referred to as a wearable intelligent device or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is not only a hardware device, but also implements a powerful function through software support, data exchange, and cloud interaction. Generalized wearable intelligent devices include full-featured and large-sized devices that can implement complete or partial functions without depending on a smartphone, for example, a smartwatch or smart glasses, and devices that focus on only one type of application function and need to work with another device such as a smartphone, for example, various smart bands or smart jewelry for monitoring physical signs.

In addition, in embodiments of this application, the user equipment may alternatively be user equipment in an internet of things (internet of things, IoT) system. IoT is an important part of future information technology development. A main technical feature of IoT is that an article is connected to a network by using a communication technology, to implement an intelligent network of man-machine interconnection and interconnection between things. In embodiments of this application, the IoT technology can implement massive connections, deep coverage, and terminal power saving by using, for example, a narrow band (narrow band, NB) technology. In addition, in embodiments of this application, the user equipment may alternatively include a sensor such as an intelligent printer, a train detector, or a gas station. Main functions include collecting data (some user equipment), receiving control information and downlink data from an access network device, sending an electromagnetic wave, and transmitting uplink data to the access network device.

FIG. 2 is a diagram of an architecture of a cellular network protocol. As shown in FIG. 2, an APP layer in UE and a server is an application layer, and a packet generated at the application layer may be a TCP/IP packet, or may be a media access control (medium access control, MAC) packet in an Ethernet (Ethernet) protocol. This is not limited in this application.

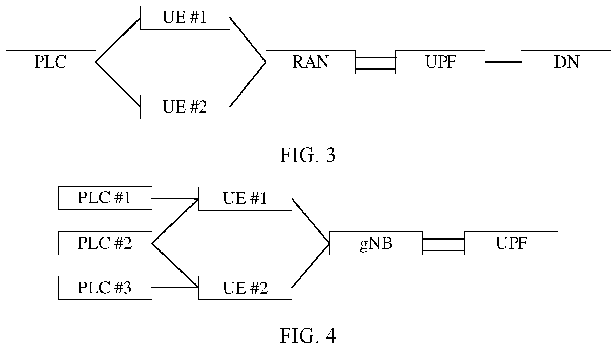

FIG. 3 is a diagram of an architecture of data transmission. As shown in FIG. 3, a programmable logic controller (programmable logic control, PLC) is a controller commonly used in an industrial scenario. During uplink transmission, control data generated by the programmable logic controller is sent to both UE #1 and UE #2, then the two UEs send same data to a radio access network (radio access network, RAN) and a user plane function (user plane function, UPF) entity, and then the data arrives at a destination network (destination network, DN). Similarly, during downlink transmission, downlink data separately arrives at the two UEs through the UPF entity and the RAN, and then is sent by the two UEs to the PLC, so that the PLC can process the data.

In a transmission process, to improve communication reliability, service data needs to be transmitted through both the UE #1 and the UE #2, and therefore the service data is transmitted twice. Consequently, double air interface resources, transmission resources, processing resources of a station, and power resources of the UE #1 and the UE #2 are consumed. However, a fault of UE occurs occasionally. To ensure communication reliability, a large quantity of resources are consumed for a long time, causing low efficiency of a communication system.

In view of this, this application provides a communication method, to detect a fault of primary UE in a timely manner, and notify backup UE to take over the primary UE when the primary UE is faulty, so that the backup UE starts to transmit service data, thereby ensuring service reliability and avoiding a loss caused by service data transmission interruption.

FIG. 4 is a diagram of an architecture of data transmission applicable to an embodiment of this application. As shown in FIG. 4, a PLC #1 is connected to UE #1, and the UE #1 is responsible for sending and receiving service data of the PLC #1. A PLC #3 is connected to UE #2, and the UE #2 is responsible for sending and receiving service data of a PLC #2. The PLC #2 is separately connected to the UE #1 and the UE #2, and both the UE #1 and the UE #2 may be responsible for sending and receiving service data of the PLC #2, and may ensure reliability of a service of the PLC #2.

Specifically, for service transmission of the PLC #2, to improve service transmission reliability, two UEs may jointly serve the PLC #2. However, for a backup transmission mode, at a specific moment, only one of the two UEs needs to provide a data transmission service for the PLC #2. For example, primary UE provides the data transmission service for the PLC #2. The other UE is backup UE. When the primary UE is not faulty, the backup UE may not perform data transmission (in this case, the backup UE may receive uplink data from the PLC). After the primary UE is faulty, a base station may indicate the backup UE to start data transmission, to ensure service transmission reliability of the PLC #2.

It should be understood that, in the following embodiments, first UE may be primary UE, that is, UE that performs data transmission with a network device in a normal case, and second UE may be backup UE, that is, UE that performs data transmission with the network device when the first UE is faulty. When the first UE is not faulty, the second UE may not perform data transmission with the network device.

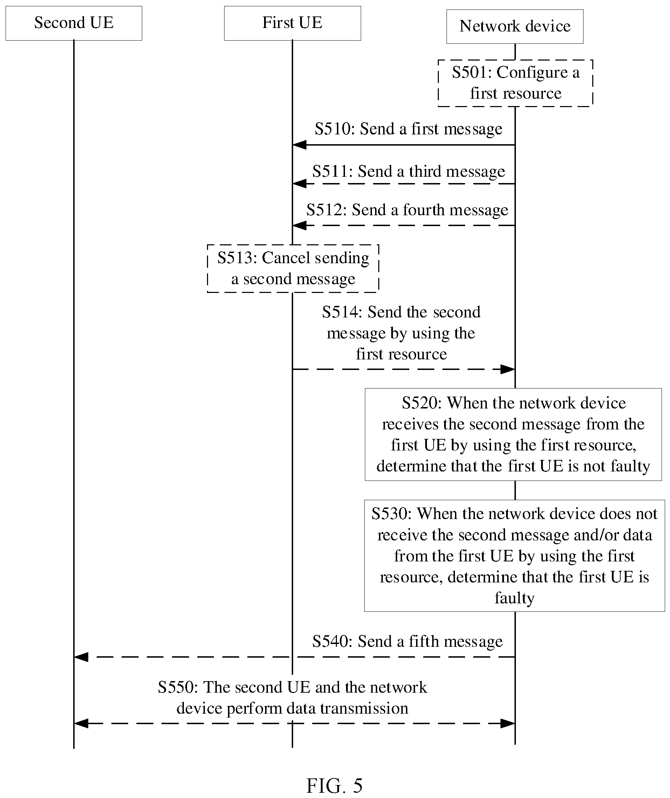

FIG. 5 is a schematic diagram of a communication method 500 according to an embodiment of this application. As shown in FIG. 5, the method 500 may include the following steps.

S510: A network device sends a first message to first UE. Correspondingly, the first UE receives the first message from the network device.

For example, the network device may send the first message to the first UE, where the first message includes information about a first resource, and the first resource is to be used to transmit a second message.

Specifically, the first resource may be an uplink resource configured by the network device for the first UE to transmit the second message. For example, the first resource may be a physical uplink control channel (physical uplink control channel, PUCCH) resource, a physical uplink shared channel (physical uplink shared channel, PUSCH) resource, or a physical random access channel (physical random access channel, PRACH) resource. The first resource may be periodic, and the second message may be a data packet or signaling, and is sent on the first resource. Further, the first resource includes at least one of a time domain resource, a code domain resource, or a frequency domain resource. The code domain resource may be a code sequence, for example, a preamble. The frequency domain resource may indicate a frequency position of the resource. The time domain resource may indicate time information of the resource, including at least one of the following: at least one specific moment, a start moment, an end moment, a time period, or a time pattern (pattern).

To ensure successful sending of the second message, it may be specified that on the first resource, sending of only the second message is allowed, and sending of other data is not allowed. In this way, data of another type cannot preempt a resource with the second message. Alternatively, a priority in a process of performing logical channel prioritization (logical channel prioritization, LCP) for the second message on the first resource may be set to the highest, so that the second message is preferentially sent on the first resource. If there is a remaining first resource in addition to that carrying the second message, the data of the another type may also be sent. In addition, if there is another uplink resource that can be used to send the second message, the second message may alternatively be sent by using the another uplink resource, especially when the another uplink resource has a shorter sending delay or higher reliability or the first resource is insufficient to carry the second message. The second message may be a specially designed data packet, for example, a heartbeat packet, and is periodically sent to another device, to indicate that the current device works normally and is not faulty.

S520: When the network device receives the second message from the first UE by using the first resource, the network device determines that the first UE is not faulty.

For example, if the network device receives the second message from the first UE by using the first resource, because the second message indicates that the first UE is not faulty, the network device may determine that the first UE is not faulty. A field of signaling or a data packet included in the second message may indicate that the first UE is not faulty. For example, the method 500 further includes S514: The first UE sends the second message to the network device by using the first resource. Correspondingly, the network device receives the second message from the first UE. In this case, the network device determines that the first UE is not faulty.

In addition, the network device may alternatively determine, by receiving service data from the first UE, or by receiving the second message by using a PUSCH resource (a resource other than the first resource) of another service, that the first UE is not faulty.

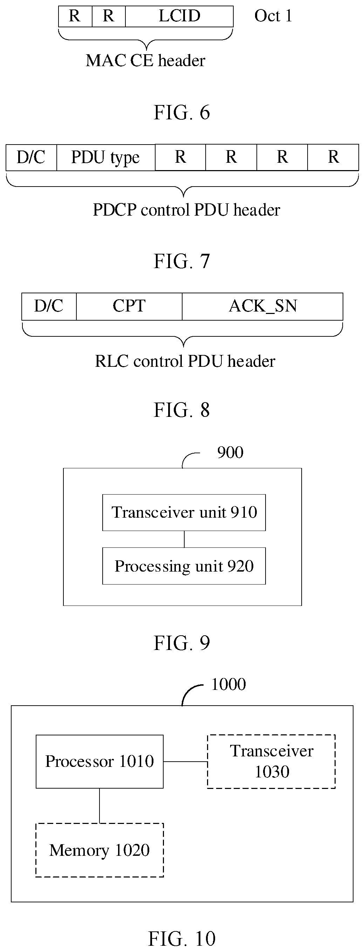

Specifically, because the second message may be PUCCH signaling or a PUSCH data packet, for example, the second message may indicate, by using a media access control control element (media access control control element, MAC CE), a packet data convergence protocol control protocol data unit (packet data convergence protocol control protocol data unit, PDCP control PDU), or a radio link control control protocol data unit (radio link control protocol control protocol data unit, RLC control PDU), that the first UE is not faulty. When the second message indicates, by using the MAC CE, that the first UE is not faulty, FIG. 6 is a schematic diagram of a MAC CE header according to an embodiment of this application. As shown in FIG. 6, a logical channel identifier (logical channel identification, LCID) field or an R field (reserved field) may be used to identify that the MAC CE indicates that the first UE is not faulty. FIG. 7 is a schematic diagram of a PDCP control PDU header according to an embodiment of this application. As shown in FIG. 7, a PDU type (PDU type) field in the PDCP control PDU header may be used to identify that the PDCP control PDU indicates that the first UE is not faulty. FIG. 8 is a schematic diagram of an RLC control PDU header according to an embodiment of this application. As shown in FIG. 8, a control protocol data unit type (control PDU type, CPT) field in the RLC control PDU header may be used to identify that the RLC control PDU indicates that the first UE is not faulty.

Further, the second message may include indication information, to indicate a bearer, an entity, or a module that is faulty in the first UE, or a bearer, an entity, or a module that is not faulty in the first UE. This can help the network device determine whether to activate data transmission of second UE, or help the network device determine to activate a specific bearer, entity, or module used for data transmission in the second UE.

S530: When the network device does not receive the second message and/or data from the first UE by using the first resource, the network device determines that the first UE is faulty.

For example, if the network device does not receive, from the first UE by using the first resource, the second message and/or the data indicating that the first UE is not faulty, the network device may determine that the first UE is faulty.

The network device may perform configuration, so that if the second message and/or the data sent by the first UE are/is not received at a preconfigured moment or within a preconfigured time period, the network device may determine that the first UE does not send the second message and/or the data because the first UE is faulty.

In addition, the network device may appropriately loosen a condition for determining that the first UE is faulty. For example, the first UE is allowed to have a retransmission time or opportunity. That is, if the first UE fails to send the second message and/or the data due to poor link quality, the first UE may further perform retransmission or notify the network device in another manner. When the network device does not receive the second message and/or the data, the network device waits for a predetermined time period, and then determines that the first UE is faulty, to avoid incorrect determining.

Optionally, before S510, the method 500 further includes S501, that is, the network device configures the first resource.

Specifically, to enable the network device to detect, in a timely manner, whether the first UE is faulty, the first UE may periodically send the second message on a dedicated uplink resource or the first resource. The network device may perform configuration, so that a period of the dedicated uplink resource or the first resource matches a sending period of the second message. For example, the network device may configure the first resource based on at least one of survival time (survival time) information, packet delay budget (packet delay budget, PDB) information, takeover (take over) delay information, fault detection delay information, or time division duplex (time division duplex, TDD) information. Further, time information in the first resource may be configured, so that the second message is sent in a more timely manner (a sending interval is short enough) as much as possible. In this way, a time of data interruption caused by a fault of the first UE is shorter than a survival time.

In an implementation, the period of the first resource should be shorter than the survival time minus the fault detection delay information and the takeover delay information. In this way, after the first UE is faulty and before a system breaks down, the second UE can replace the first UE to resume a normal data transmission process.

The survival time means: If an application layer does not receive an expected data packet at an expected moment, a timer may be started. If the expected data is still not received during running of the timer, that is, within duration of the survival time, the application layer considers that the service cannot be continued, and then a system breakdown is caused.

A packet delay budget means that a maximum transmission delay of a data packet cannot exceed such a value.

A takeover delay refers to a time period from a moment when the network device detects that the first UE is faulty to a moment when the second UE successfully replaces the first UE to resume a data transmission process.

A time division duplex configuration means that an uplink-downlink subframe configuration is configured before data transmission in a TDD system. In an uplink subframe, a terminal device may perform uplink sending, and in a downlink subframe, the terminal device may perform downlink receiving.

For example, a period for sending the second message by the first UE may be less than or equal to a value obtained by subtracting the takeover delay from the survival time. This can ensure that when the first UE is faulty, a delay for resuming data transmission by the second UE is shorter than the survival time.

Optionally, the method 500 further includes S511: The network device sends a third message to the first UE. Correspondingly, the first UE receives the third message from the network device.

The network device may send the third message to the first UE, where the third message is used to activate or deactivate a mechanism in which the first UE sends the second message to the network device by using the first resource.

Specifically, the network device may dynamically control to activate or deactivate the mechanism in which the first UE sends the second message to the network device by using the first resource. During activation, the first UE may periodically send the second message by using the configured first resource or a dedicated uplink resource. During deactivation, the first UE does not send the second message, and sending is resumed after the mechanism in which the first UE sends the second message to the network device by using the first resource is activated again. During deactivation, the first resource or the dedicated uplink resource may be used to send a message of another type other than the second message or data of another service.

For example, when the first UE performs frequent service interaction, a resource is insufficient, or cell load is relatively heavy (there are a relatively large quantity of accessed UEs), if the network device considers that sending of the second message may increase load of the network device, the network device may send, to the first UE, a message used to deactivate (cancel) the mechanism in which the first UE sends the second message to the network device by using the first resource. Correspondingly, after the load is relieved, the network device may send, to the first UE, a message used to activate (resume) the mechanism in which the first UE sends the second message to the network device by using the first resource. In addition, the network device may modify the first resource by using dynamic signaling, for example, flexibly modify a sending period of the second message, a period of the first resource or the dedicated uplink resource, and a position of the first resource or the dedicated uplink resource.

In addition, the network device may determine, based on some prior information, for example, information obtained based on artificial intelligence, historical statistics, or big data, that a probability that the first UE is faulty in a specific time period is lower than a specific threshold. In this case, the network device may send the third message to the first UE, to deactivate the mechanism in which the first UE sends the second message to the network device by using the first resource. Alternatively, the network device determines that a probability that the first UE is faulty in a specific time period is higher than a specific threshold. In this case, the network device may send the third message to the first UE, to activate the mechanism in which the first UE sends the second message to the network device by using the first resource.

Optionally, the method 500 further includes S512: The network device sends a fourth message to the first UE. Correspondingly, the first UE receives the fourth message from the network device.

When the first resource overlaps a second resource, the network device may send the fourth message to the first UE, where the fourth message indicates the first UE to cancel sending the second message to the network device by using the first resource, and the second resource is used by the first UE to transmit data.

Specifically, if the first resource or the dedicated uplink resource used to transmit the second message overlaps or collides with a PUSCH resource of another service in time domain, the network device may send the fourth message to the first UE, so that the first UE cancels sending the second message to the network device by using the first resource.

In a possible implementation, the network device may cancel, by sending the fourth message, the first resource or the dedicated uplink resource used by the first UE to transmit the second message, to cancel sending, by the first UE, the second message to the network device by using the first resource.

In another possible implementation, the network device may send the fourth message, so that the first UE sends the second message by using a PUSCH resource of another service, to cancel sending, by the first UE, the second message to the network device by using the first resource.

Optionally, the method 500 further includes S513: The first UE cancels sending the second message to the network device by using the first resource.

When the first resource overlaps the second resource, the first UE may cancel sending the second message to the network device by using the first resource.

In a possible implementation, the first UE may cancel, by receiving the fourth message from the network device, sending the second message to the network device by using the first resource.

The fourth message may be used to cancel the first resource or the dedicated uplink resource used by the first UE to transmit the second message, and the first UE may cancel sending the second message to the network device by using the first resource.

Alternatively, the fourth message may enable the first UE to send the second message by using the PUSCH resource of the another service, and the first UE may cancel sending the second message to the network device by using the first resource.

In another possible implementation, the first UE may autonomously cancel sending the second message to the network device by using the first resource without receiving additional indication information of the network device, and send the second message by using a PUSCH resource of another service.

In the foregoing solution, the network device receives the service data of the first UE by using the first resource, or receives the second message by using the PUSCH resource of the another service, and may determine that the first UE is not faulty. Therefore, the second message does not need to be additionally sent, or the first resource or the dedicated uplink resource does not need to be occupied to send the second message. If a resource scheduled for another service overlaps the first resource or the dedicated uplink resource of the second message in time domain, the network device may learn that the first UE no longer sends the second message by using the first resource or the dedicated uplink resource of the second message, so that the first resource or the dedicated uplink resource of the second message may be released for use by other UE, or for scheduling of another service of the first UE, thereby improving resource utilization.

Optionally, when the network device determines that the first UE is faulty, the method 500 further includes S540: The network device sends a fifth message to the second UE. Correspondingly, the second UE receives the fifth message from the network device.

The network device may send the fifth message to the second UE, where the fifth message indicates the second UE to start data transmission with the network device. The second UE is in a waiting state, and in the waiting state, the second UE does not perform data transmission with the network device.

Specifically, the fifth message may be understood as a takeover indication, so that the second UE starts data transmission with the network device. The second UE starts uplink data sending. In addition, the network device starts downlink data sending, and the second UE receives downlink data. In the waiting state, the second UE has received configuration information sent by the network device and completed configuration based on the configuration information, but does not perform data transmission temporarily. The configuration information may include indication information indicating the waiting state. In the waiting state, the second UE may normally receive data from a PLC, but temporarily buffer the data, instead of sending the data to the network device. In addition, the network device does not send downlink data to the second UE in the waiting state. In addition, in the waiting state, the network device and the second UE may perform some necessary information exchange, for example, reference signal sending and receiving, according to a configuration of the network device, to maintain a connection state or a synchronization state between the network device and the second UE. Optionally, the waiting state is a radio resource control (radio resource control, RRC) connected state. The configuration information may include configuration information of data transmission and configuration information of transmission of the second message, and is sent by the network device to the second UE in advance, so that after receiving the fifth information, the second UE may activate the configuration to perform data transmission with the network device. The fifth information may be considered by the UE as an activation instruction or an instruction for changing a status of the second UE, for example, changing the status of the second UE from the waiting state to a connected state.

Further, the fifth message may indicate information about a start data packet of data transmission between the second UE and the network device.

Specifically, if an uplink or downlink resource may be allocated to the start data packet, the second UE may set a priority of the start data packet to the highest, and send or receive the start data packet. A priority of a subsequent data packet is restored to normal. An objective of indicating the start data packet is to enable the second UE to determine a specific data packet from which sending or receiving starts. In addition, a corresponding send window or receive window may be set based on the fifth message.

The information about the start data packet of data transmission may include at least one of a data radio bearer identifier, a logical channel identifier, a sequence number (for example, a PDCP sequence number or an RLC sequence number), or an uplink resource. In an uplink transmission process, if a resource used for transmission of the start data packet is allocated, transmission of the start data packet needs to be preferentially ensured. A priority of the start data packet may be set to the highest. There is a remaining resource for transmission of another data packet, or transmission of the start data packet is allowed on only the allocated resource.

It should be noted that, if a plurality of services are simultaneously performed (transmitted by using different radio bearers) before the first UE is faulty, different start data packets corresponding to different services or different radio bearers may be separately indicated in the fifth message.

In addition, when the first UE is not faulty, the second UE does not need to perform data transmission, and does not need to send, to the network device, a message indicating that the second UE is not faulty. After receiving the fifth message, the second UE may autonomously activate a mechanism of sending, to the network device, a message indicating that the second UE is not faulty, and then perform data transmission with the network device. Alternatively, the network device may send a message to the second UE, so that the second UE activates a mechanism of sending, to the network device, a message indicating that the second UE is not faulty. Alternatively, activation indication information is carried in the fifth message, to indicate the second UE to activate a mechanism of sending, to the network device, a message indicating that the second UE is not faulty, and perform data transmission with the network device.

Optionally, after the network device sends the fifth message to the second UE, the method 500 further includes S550: The second UE performs data transmission with the network device.

After receiving the fifth message, the second UE may perform data transmission with the network device.

It should be understood that, in the foregoing solution, unless otherwise specified, there is no limitation on a sequence relationship, a causal relationship, or another logical relationship between the steps, and the steps are all optional steps. In a possible implementation, if S5140 and S520 are performed, S530 to S550 are not performed; or if S514 and S520 are not performed, S530 to S550 are performed. Another implementation is not limited in this application.

Based on the foregoing solution, the network device may determine, based on the second message sent by the first UE, that the first UE is not faulty, to ensure that service reliability is not affected by a fault of the first terminal device, and avoid forced termination of service transmission. When service interaction is frequent, a resource is insufficient, or cell load is relatively heavy (there are a relatively large quantity of accessed UEs), or when the network device determines that a fault probability of the first UE is relatively low, the network device may send, to the first UE, the third message used to deactivate the mechanism in which the first UE sends the second message to the network device by using the first resource. In this way, load can be relieved. After the load is relieved, the network device may send, to the first UE, the third message used to activate the mechanism in which the first UE sends the second message to the network device by using the first resource, to resume sending of the second message by the first UE, so as to ensure reliability of the first UE. When the first resource overlaps the second resource, the first UE cancels sending the second message to the network device by using the first resource, so that resource utilization can be improved. When the network device does not receive the second message and/or the data from the first UE by using the first resource, the network device may determine that the first UE is faulty, and send, to the second UE, the fifth message that indicates the second UE to start data transmission with the network device. This can ensure that service transmission is not affected by a fault of the first UE, and improve service transmission reliability. According to the information about the start data packet carried in the fifth message, a data packet transmitted between the second UE and the network device can be spliced with a data packet transmitted before the first UE is faulty. This ensures service transmission continuity, improves service transmission reliability, and improves user experience.

It may be understood that in the foregoing method embodiments, the method and the operation implemented by the terminal device may alternatively be implemented by a component (for example, a chip or a circuit) that can be used in the terminal device, and the method and the operation implemented by the network device may alternatively be implemented by a component (for example, a chip or a circuit) that can be used in the network device.

The method provided in embodiments of this application is described in detail above with reference to FIG. 5 to FIG. 8. The communication apparatus provided in embodiments of this application is described below in detail with reference to FIG. 9 to FIG. 12. It should be understood that descriptions of apparatus embodiments correspond to the descriptions of the method embodiments. Therefore, for content that is not described in detail, refer to the foregoing method embodiments. For brevity, details are not described herein again.

The foregoing mainly describes the solutions provided in embodiments of this application from a perspective of interaction between network elements. It may be understood that, to implement the foregoing functions, each network element, for example, a transmit end device or a receive end device, includes a corresponding hardware structure and/or software module for executing the functions. A person skilled in the art should be aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, a transmitting end device or a receiving end device may be divided into function modules according to the foregoing method examples. For example, each function module may be obtained through division based on each corresponding function, or two or more functions may be integrated into one processing module. The integrated module may be implemented in a form of hardware, or may be implemented in a form of a software function module. It should be noted that division into the modules in embodiments of this application is an example, and is merely logical function division. In actual implementation, there may be another division manner. An example in which each function module is obtained through division based on each corresponding function is used below for description.

FIG. 9 is a schematic block diagram of a communication apparatus according to an embodiment of this application. The communication apparatus 900 includes a transceiver unit 910 and a processing unit 920. The transceiver unit 910 may implement a corresponding communication function, and the processing unit 910 is configured to perform data processing. The transceiver unit 910 may also be referred to as a communication interface or a communication unit.

Optionally, the communication apparatus 900 may further include a storage unit. The storage unit may be configured to store instructions and/or data. The processing unit 920 may read the instructions and/or the data in the storage unit, so that the communication apparatus implements the foregoing method embodiments.

The communication apparatus 900 may be configured to perform an action performed by the terminal device in the foregoing method embodiments. In this case, the communication apparatus 900 may be a terminal device or a component that can be configured in the terminal device. The transceiver unit 910 is configured to perform operations related to sending and receiving on a terminal device side in the foregoing method embodiments. The processing unit 920 is configured to perform operations related to processing on the terminal device side in the foregoing method embodiments.

Alternatively, the communication apparatus 900 may be configured to perform an action performed by the network device in the foregoing method embodiments. In this case, the communication apparatus 900 may be a network device or a component that can be configured in the network device. The transceiver unit 910 is configured to perform operations related to sending and receiving on a network device side in the foregoing method embodiments. The processing unit 920 is configured to perform operations related to processing on the network device side in the foregoing method embodiments.

In a design, the communication apparatus 900 is configured to perform an action performed by the first terminal device in the foregoing embodiment shown in FIG. 5.

The communication apparatus 900 may implement a step or a procedure performed by the first terminal device in the method 500 according to embodiments of this application, and the communication apparatus 900 may include units configured to perform the method performed by the first terminal device in the method 500 in FIG. 5. In addition, the units in the communication apparatus 900 and the foregoing other operations and/or functions are separately used to implement corresponding procedures of the method 500 in FIG. 5.

It should be understood that a specific process in which the units perform the foregoing corresponding steps is described in detail in the foregoing method embodiments. For brevity, details are not described herein.

In another design, the communication apparatus 900 is configured to perform an action performed by the second terminal device in the foregoing embodiment shown in FIG. 5.

The communication apparatus 900 may implement a step or a procedure performed by the second terminal device in the method 500 according to embodiments of this application, and the communication apparatus 900 may include units configured to perform the method performed by the second terminal device in the method 500 in FIG. 5. In addition, the units in the communication apparatus 900 and the foregoing other operations and/or functions are separately used to implement corresponding procedures of the method 500 in FIG. 5.

The processing unit 920 in the foregoing embodiments may be implemented by at least one processor or a processor-related circuit. The transceiver unit 910 may be implemented by a transceiver or a transceiver-related circuit. The transceiver unit 910 may also be referred to as a communication unit or a communication interface. The storage unit may be implemented by at least one memory.

It should be understood that a specific process in which the units perform the foregoing corresponding steps is described in detail in the foregoing method embodiments. For brevity, details are not described herein.

In another design, the communication apparatus 900 is configured to perform an action performed by the network device in the foregoing embodiment shown in FIG. 5.

The communication apparatus 900 may implement a step or a procedure performed by the network device in the method 500 according to embodiments of this application, and the communication apparatus 900 may include units configured to perform the method performed by the network device in the method 500 in FIG. 5. In addition, the units in the communication apparatus 900 and the foregoing other operations and/or functions are separately used to implement corresponding procedures of the method in FIG. 5.

The processing unit 920 in the foregoing embodiments may be implemented by at least one processor or a processor-related circuit. The transceiver unit 910 may be implemented by a transceiver or a transceiver-related circuit. The transceiver unit 910 may also be referred to as a communication unit or a communication interface. The storage unit may be implemented by at least one memory.

It should be understood that a specific process in which the units perform the foregoing corresponding steps is described in detail in the foregoing method embodiments. For brevity, details are not described herein.

As shown in FIG. 10, an embodiment of this application further provides a communication apparatus 1000. The communication apparatus 1000 includes a processor 1010. The processor 1010 is coupled to a memory 1020. The memory 1020 is configured to store a computer program or instructions and/or data. The processor 1010 is configured to execute the computer program or the instructions and/or the data stored in the memory 1020, so that the method in the foregoing method embodiments is performed.

Optionally, the communication apparatus 1000 includes one or more processors 1010.

Optionally, as shown in FIG. 10, the communication apparatus 1000 may further include the memory 1020.

Optionally, the communication apparatus 1000 may include one or more memories 1020.

Optionally, the memory 1020 and the processor 1010 may be integrated together, or may be disposed separately.

Optionally, as shown in FIG. 10, the communication apparatus 1000 may further include a transceiver 1030. The transceiver 1030 is configured to receive a signal and/or send a signal. For example, the processor 1010 is configured to control the transceiver 1030 to receive a signal and/or send a signal.

In a solution, the communication apparatus 1000 is configured to implement operations performed by the first terminal device or the second terminal device in the foregoing method embodiments.

For example, the processor 1010 is configured to implement operations related to processing performed by the first terminal device or the second terminal device in the foregoing method embodiments, and the transceiver 1030 is configured to implement operations related to sending and receiving performed by the first terminal device or the second terminal device in the foregoing method embodiments.

In another solution, the communication apparatus 1000 is configured to implement operations performed by the network device in the foregoing method embodiments.

For example, the processor 1010 is configured to implement operations related to processing performed by the network device in the foregoing method embodiments, and the transceiver 1030 is configured to implement operations related to sending and receiving performed by the network device in the foregoing method embodiments.

An embodiment of this application further provides a communication apparatus 1100. The communication apparatus 1100 may be a terminal device, or may be a chip. The communication apparatus 1100 may be configured to perform operations performed by the terminal device in the foregoing method embodiments.

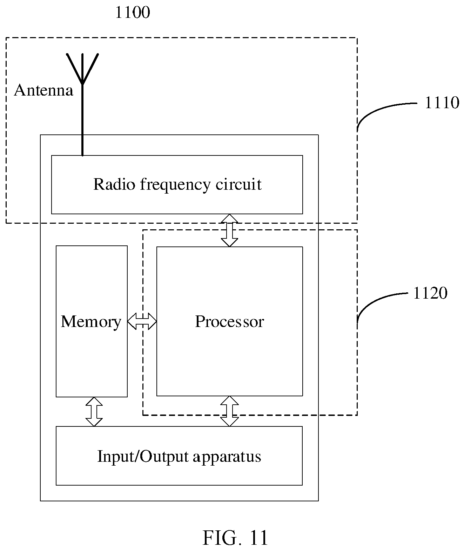

When the communication apparatus 1100 is a terminal device, FIG. 11 is a simplified schematic diagram of a structure of a terminal device. As shown in FIG. 11, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store the software program and data. The radio frequency circuit is mainly configured to perform conversion between a baseband signal and a radio frequency signal, and process the radio frequency signal. The antenna is mainly configured to receive and send radio frequency signals in a form of electromagnetic waves. The input/output apparatus, such as a touchscreen, a display, or a keyboard, is mainly configured to: receive data input by a user and output data to the user. It should be noted that some types of terminal devices may have no input/output apparatus.

When data needs to be sent, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 11 shows only one memory and one processor. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver unit of the terminal device, and the processor that has a processing function may be considered as a processing unit of the terminal device.

As shown in FIG. 11, the terminal device includes a transceiver unit 1110 and a processing unit 1120. The transceiver unit 1110 may also be referred to as a transceiver machine, a transceiver, a transceiver apparatus, or the like. The processing unit 1120 may also be referred to as a processor, a processing board, a processing module, a processing apparatus, or the like.

Optionally, a component that is in the transceiver unit 1110 and that is configured to implement a receiving function may be considered as a receiving unit, and a component that is in the transceiver unit 1110 and that is configured to implement a sending function may be considered as a sending unit. In other words, the transceiver unit 1110 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

For example, the processing unit 1120 is configured to perform a processing action on a first terminal device side or a second terminal device side in FIG. 5. For example, the processing unit 1120 is configured to perform a processing step in FIG. 5, and the transceiver unit 1110 is configured to perform receiving and sending operations in FIG. 5.

It should be understood that FIG. 11 is merely an example rather than a limitation. A first terminal device or a second terminal device including the transceiver unit and the processing unit may not depend on the structure shown in FIG. 11.

When the communication apparatus 1100 is a chip, the chip includes a transceiver unit and a processing unit. The transceiver unit may be an input/output circuit or a communication interface. The processing unit may be a processor, a microprocessor, or an integrated circuit integrated on the chip.

An embodiment of this application further provides a communication apparatus 1200. The communication apparatus 1200 may be a network device, or may be a chip. The communication apparatus 1200 may be configured to perform an operation performed by the first network device, the second network device, the third network device, the SMF entity, the UPF entity, or the base station in the foregoing method embodiments.

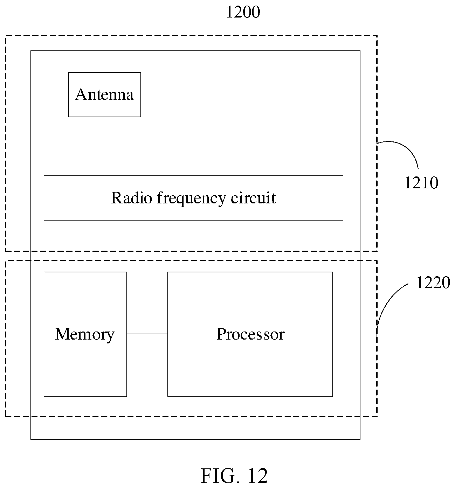

When the communication apparatus 1200 is a network device, FIG. 12 is a simplified schematic diagram of a structure of a network device 1200. The network device includes a part 1210 and a part 1220. The part 1210 is mainly configured to: receive and send radio frequency signals, and perform conversion between a radio frequency signal and a baseband signal. The part 1220 is mainly configured to perform processing, control, and the like. The part 1210 may be usually referred to as a transceiver unit, a transceiver machine, a transceiver circuit, a transceiver, or the like. The part 1220 is usually a control center of the network device, may be usually referred to as a processing unit, and is configured to control the network device to perform a processing operation on a network device side in the foregoing method embodiments.

The transceiver unit in the part 1210 may also be referred to as a transceiver machine, a transceiver, or the like. The transceiver unit includes an antenna and a radio frequency circuit, where the radio frequency circuit is mainly configured to perform radio frequency processing. Optionally, a component that is in the part 1210 and that is configured to implement a receiving function may be considered as a receiving unit, and a component that is in the part 1210 and that is configured to implement a sending function may be considered as a sending unit. In other words, the part 1210 includes the receiving unit and the sending unit. The receiving unit may also be referred to as a receiver, a receive machine, a receiving circuit, or the like, and the sending unit may also be referred to as a transmitter, a transmit machine, a transmitting circuit, or the like.

The part 1220 may include one or more boards, and each board may include one or more processors and one or more memories. The processor is configured to read and execute a program in the memory, to implement a baseband processing function and control the base station. If there are a plurality of boards, the boards may be interconnected with each other, to enhance a processing capability. In an optional implementation, a plurality of boards may share one or more processors, or a plurality of boards share one or more memories, or a plurality of boards share one or more processors at the same time.

For example, in an implementation, the transceiver unit in the part 1210 is configured to perform steps related to sending and receiving performed by the network device in the embodiment shown in FIG. 5. The part 1220 is configured to perform steps related to processing performed by the network device in the embodiment shown in FIG. 5.

It should be understood that FIG. 12 is merely an example rather than a limitation. A network device including the transceiver unit and the processing unit may not depend on the structure shown in FIG. 12.

When the communication apparatus 1200 is a chip, the chip includes a transceiver unit and a processing unit. The transceiver unit may be an input/output circuit or a communication interface. The processing unit is a processor, a microprocessor, or an integrated circuit integrated on the chip.

An embodiment of this application further provides a computer-readable storage medium. The computer-readable storage medium stores computer instructions used to implement the method performed by the first terminal device, the method performed by the second terminal device, or the method performed by the network device in the foregoing method embodiments.

For example, when the computer program is executed by a computer, the computer is enabled to implement the method performed by the first terminal device, the method performed by the second terminal device, or the method performed by the network device in the foregoing method embodiments.

An embodiment of this application further provides a computer program product including instructions. When the instructions are executed by a computer, the computer is enabled to implement the method performed by the first terminal device, the method performed by the second terminal device, or the method performed by the network device in the foregoing method embodiments.

An embodiment of this application further provides a communication system. The communication system includes the network device, the first terminal device, and the second terminal device in the foregoing embodiments.

It may be clearly understood by a person skilled in the art that, for the purpose of convenient and brief description, for explanations of related content and beneficial effects in any of the foregoing provided communication apparatuses, refer to the corresponding method embodiment provided above. Details are not described herein again.

In embodiments of this application, the terminal device or the network device may include a hardware layer, an operating system layer running above the hardware layer, and an application layer running above the operating system layer. The hardware layer may include hardware such as a central processing unit (central processing unit, CPU), a memory management unit (memory management unit, MMU), and memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant communication software.

A specific structure of an execution body of the method provided in embodiments of this application is not particularly limited in embodiments of this application, provided that communication can be performed according to the method in embodiments of this application by running a program that records code of the method provided in embodiments of this application. For example, the method provided in embodiments of this application may be performed by a terminal device or a network device, or may be performed by a function module that is in the terminal device or the network device and that can invoke and execute a program.

Aspects or features of this application may be implemented as a method, an apparatus, or a product that uses standard programming and/or engineering technologies. The term "product" used in this specification may cover a computer program that can be accessed from any computer-readable component, carrier, or medium.

The computer-readable storage medium may be any usable medium accessible by a computer, or a data storage device such as a server or a data center that integrates one or more usable media. The usable medium (namely, the computer-readable medium) may include, for example, but is not limited to, various media that can store program code, such as a magnetic medium or a magnetic storage device (for example, a floppy disk, a hard disk (for example, a removable hard disk), or a magnetic tape), an optical medium (for example, an optical disc, a compact disc (compact disc, CD), or a digital versatile disc (digital versatile disc, DVD)), a smart card, a flash memory device (for example, an erasable programmable read-only memory (erasable programmable read-only memory, EPROM), a card, a stick, or a key drive), or a semiconductor medium (for example, a solid-state disk (solid-state disk, SSD), a USB flash drive, a read-only memory (read-only memory, ROM), or a random access memory (random access memory, RAM)).

Various storage media described in this specification may indicate one or more devices and/or other machine-readable media configured to store information. The term "machine-readable media" may include but is not limited to a radio channel, and various other media that can store, include, and/or carry instructions and/or data.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include a plurality of forms, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification aims to include but is not limited to these memories and any memory of another proper type.

In the several embodiments provided in this application, it should be understood that the disclosed apparatus and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the solutions provided in this application.

In addition, function units in embodiments of this application may be integrated into one unit, or each unit may exist alone physically, or two or more units may be integrated into one unit.

All or some of the foregoing embodiments may be implemented by software, hardware, firmware, or any combination thereof.

When software is used to implement the embodiments, all or some of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims and the specification.

## Claims

1. A communication method, comprising:
sending, by a network device, a first message to a first terminal device UE, wherein the first message comprises information about a first resource, and the first resource is to be used to transmit a second message; and
when the network device receives the second message from the first UE by using the first resource, determining, by the network device, that the first UE is not faulty, wherein the second message indicates that the first UE is not faulty.

2. The method according to claim 1, wherein the first resource comprises at least one of a time domain resource or a frequency domain resource.

3. The method according to claim 1 or 2, wherein the method further comprises:
configuring, by the network device, the first resource based on at least one of survival time information, packet delay budget information, takeover delay information, or time division duplex information.

4. The method according to any one of claims 1 to 3, wherein the method further comprises:
sending, by the network device, a third message to the first UE, wherein the third message is used to activate or deactivate a mechanism in which the first UE sends the second message to the network device by using the first resource.

5. The method according to any one of claims 1 to 4, wherein the method further comprises:
when the first resource overlaps a second resource, sending, by the network device, a fourth message to the first UE, wherein the fourth message indicates the first UE to cancel sending the second message to the network device by using the first resource, and the second resource is used by the first UE to transmit data.

6. The method according to any one of claims 1 to 5, wherein the method further comprises:
when the network device does not receive the second message and/or data from the first UE by using the first resource, determining, by the network device, that the first UE is faulty.

7. The method according to claim 6, wherein the method further comprises:
sending, by the network device, a fifth message to second UE, wherein the fifth message indicates the second UE to start data transmission with the network device; and
performing, by the network device, data transmission with the second UE.

8. The method according to claim 7, wherein the fifth message further indicates information about a start data packet of the data transmission.

9. The method according to claim 8, wherein the information about the start data packet of the data transmission comprises at least one of a data radio bearer identifier, a logical channel identifier, or a sequence number.

10. A communication method, comprising:
receiving, by first UE, a first message from a network device, wherein the first message comprises information about a first resource, and the first resource is to be used to transmit a second message; and
sending, by the first UE, the second message to the network device by using the first resource, wherein the second message indicates that the first UE is not faulty.

11. The method according to claim 10, wherein the first resource comprises at least one of a time domain resource or a frequency domain resource.

12. The method according to claim 10 or 11, wherein the method further comprises:
receiving, by the first UE, a third message from the network device, wherein the third message is used to activate or deactivate a mechanism in which the first UE sends the second message to the network device by using the first resource.

13. The method according to any one of claims 10 to 12, wherein the method further comprises:
when the first resource overlaps a second resource, canceling, by the first UE, sending the second message to the network device by using the first resource, wherein the second resource is used by the first UE to transmit data.

14. The method according to claim 13, wherein the method further comprises:
receiving, by the first UE, a fourth message from the network device, wherein the fourth message indicates the first UE to cancel sending the second message.

15. A communication method, comprising:
receiving, by second UE, a fifth message from a network device, wherein the fifth message indicates the second UE to start data transmission with the network device, the second UE is in a waiting state, and in the waiting state, the second UE does not perform data transmission with the network device; and
performing, by the second UE, data transmission with the network device.

16. The method according to claim 15, wherein the fifth message further indicates information about a start data packet of the data transmission.

17. The method according to claim 16, wherein the information about the start data packet of the data transmission comprises at least one of a data radio bearer identifier, a logical channel identifier, or a sequence number.

18. A communication apparatus, comprising:
a memory, configured to store computer instructions; and
a processor, configured to execute the computer instructions stored in the memory, so that the communication apparatus performs the method according to any one of claims 1 to 9, claims 10 to 14, or claims 15 to 17.

19. A computer-readable storage medium, wherein the computer-readable storage medium stores a computer program, and when the computer program is executed by a communication apparatus, the communication apparatus is enabled to perform the method according to any one of claims 1 to 9, claims 10 to 14, or claims 15 to 17.

20. A computer program product, wherein the computer program product is used to perform the method according to any one of claims 1 to 9, claims 10 to 14, or claims 15 to 17.

21. A chip, wherein the chip comprises a processor and a data interface, and the processor reads, by using the data interface, instructions stored in a memory, to perform the method according to any one of claims 1 to 9, claims 10 to 14, or claims 15 to 17.
